# EUROPEAN PATENT SPECIFICATION

(11) **EP 2 314 189 B1**
(45) Date of publication and mention of the grant of the patent: **24.04.2013**
(21) Application number: 10188435.1
(22) Date of filing: 21.10.2010
(51) Int. Cl.: A47J 43/10, A47J 43/07

(54) **Whisking disc attachment for food processor appliance**
Quirlscheibenzubehörteil für eine Lebensmittelverarbeitungsvorrichtung
Fixateur de disque de fouettage pour robot-mixer

(30) Priority: 22.10.2009 US 254038 P
(43) Date of publication of application: 27.04.2011
(73) Proprietor: Conair Corporation, Stamford, CT 06902 (US)
(72) Inventor: Fung, Kam Fai, Stamford, CT 06902 (US)
(74) Representative: Andrews, Martyn Peter

(56) References cited:
- EP-A2- 0 137 136
- WO-A1-01/74215
- WO-A2-2004/030498
- DE-C1- 3 635 086

## Description

### CROSS-REFERENCE TO RELATED APPLICATIONS

This application relates to, and claims priority from, United States Provisional Application 61/254038 filed on 22 October 2009.

### BACKGROUND OF THE INVENTION

The present invention relates to electric appliances and, more particularly, to electric food processor appliances having an electric motor adapted to cause rotation of a disc attachment for cutting or mixing of food.

### Description of Related Art

Various designs exist for disc attachments used in food processors and similar electric appliances for cutting, mixing and slicing food. For blending or whisking foods such as eggs or other viscous liquids or soft solids, stand mixers or handheld mixers with traditional whisking attachments such as egg beaters are used. Certain appliances known as food processors comprise a bowl having an opening on its floor so that a driven shaft protrudes into the bowl when it is rested on a base. A cutting or slicing disc with a hub that fits over the shaft is attached and a lid is fixed. Food product is introduced through a chute on the lid. Food processors and mixers such as stand mixers or handheld mixers are separate appliances that perform distinct functions. In situations where a food processor appliance of the type that uses a disc implement housed in a covered bowl is being utilized, one must use a separate appliance for whisking. Known food processor discs are designed for cutting and slicing, and none are suitable for performing a whisking function. Cutting edges will introduce undesirable air and create foam. No known disc attachments for use in a food processor type appliance are configured for or capable of whisking.

EP0137136 describes a food processor having a disc shaped rotary whipping tool.

### OBJECT OF THE PRESENT INVENTION

It is an object of the present invention to provide a disc attachment for use with a food processor type appliance that is configured for whisking.

These and other objects are achieved by the present invention disclosed herein.

### SUMMARY OF THE INVENTION

According to the present invention, a blade attachment for use with a food processor includes: a planar portion that is tilted so as to not be parallel to the floor of a food processor bowl; a slanted, radially extending portion on the planar portion; a series of holes in the slanted portion that each extend through the planar portion.

### BRIEF DESCRIPTION OF THE DRAWINGS

Figure 1 is a series of views of the present invention including side, front, bottom and bottom-perspective views.
Figure 2 is a series of views of the present invention including side, side cross-sectional, front, bottom, bottom-perspective and detail- partial views.
Figure 3 is a series of views of the present invention including side cross-sectional, and top-perspective views

### DESCRIPTION OF THE PREFERRED EMBODIMENT OF THE PRESENT INVENTION

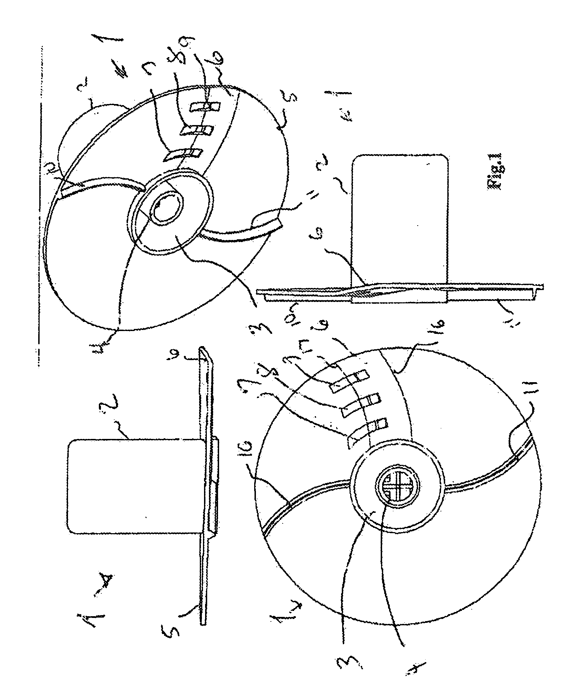

Referring to Figs. 1 - 3, a disc attachment 1 according to the present invention comprises a central hub 2 having an opening 3 at its bottom and an internal shaft-receiving sleeve 4. The sleeve 4 is adapted to engage a driven shaft (not shown) of an electric food processor of a type generally known. A circular disc portion 5 is attached at one end of the hub 2. The disc portion 5 is round in profile when viewed from the top or the bottom. When viewed from the side, the disc portion 5 includes a slanted portion 6 that extends radially from the center to the radial edge of the disc portion 5. The slanted portion 6 forms a step so that the disc portion on one side of the slanted portion 6 is not co-planar with the disc portion on the other side of the slanted portion 6. A series of three holes 7, 8, 9, are each elongated in generally rectangular shapes with slightly curved sides. The holes are arranged to each extend from a position in the slanted portion 6 to a position in the adjacent disc portion 5 in order to span across the trailing edge 17 of the slanted portion 6 discussed below.

On each side of the center of the disc portion 5, on the bottom surface of the disc portion 5, is a first curved rib 10 and a second curved rib 11. Each rib extends from the hole 3 to the radial edge of the disc portion 5. The ribs each have a generally curved shape when viewing from the bottom of the disc attachment 1.

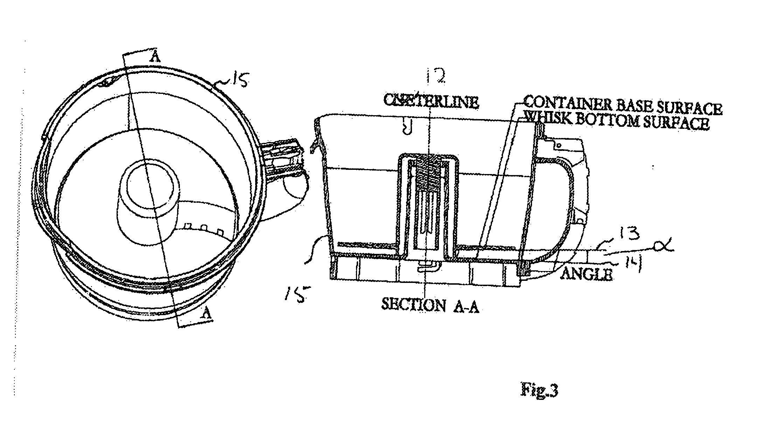

As shown in the side cross sectional view of Figure 3, the centerline 12 of the hub 2, which is coincident with the centerline of a driven shaft to which the hub is adapted to mount, is not perpendicular to the disc plane 13 formed by a plane in which the disc portion 5 resides. Instead, the centerline 2 and disc plane 13 are angled with respect to one another so that on one side the relationship is less than ninety degrees, and on the opposite side it is greater than ninety degrees, as shown in Figure 3. The container or bowl plane 14 defined by a plane in which the floor of a food processor container 15 or bowl resides in and that the disc attachment 1 is placed in, is thus oriented at an angle a with respect to the disc plane, as shown in Figure 3.

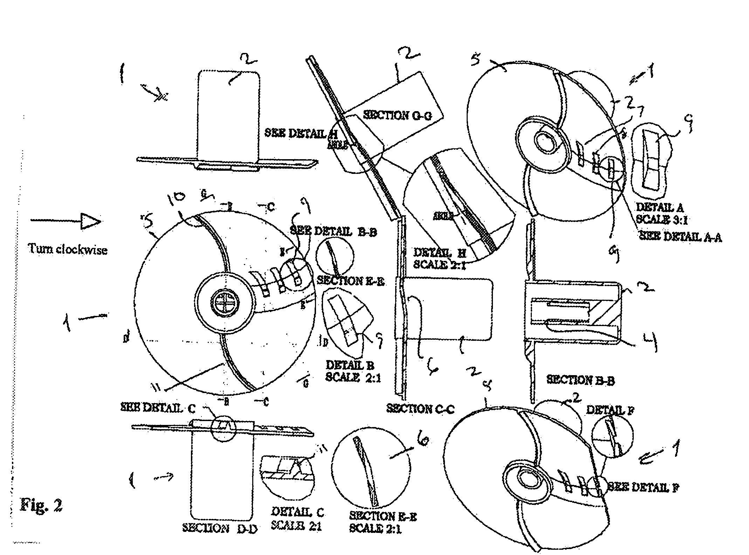

During use, the disc attachment 1 is mounted to a driven shaft of a food processor for rotation. As the disc attachment 1 is rotated clockwise with respect to the bottom views of Figures 1-3, the slanted portion 6 passes over a liquid or food product to be mixed. The leading edge 16 of the slanted portion 6 is at a higher vertical elevation than the trailing edge 17 so that the slanted portion engages the liquid or food to be mixed in a manner that forces some of it through the holes 7, 8, 9. The holes 7,8,9 may be sized and shaped for optimum performance in order to, for example, extract egg white through the holes for whisking. As shown in the detail views of Figure 2, the holes 7,8,9 may have larger openings on the bottom surface of the disc portion 5 than on the top surface. As the disc attachment 1 is driven, the curved ribs 10 and 11 mix and move the food material or fluid being mixed to enhance whisking. By having the disc portion 5 tilted rather than perpendicular with respect to the hub 2, as previously discussed, food product or liquid that is gathered at or close to the floor of the container is moved and compressed in order to reduce air bubble formation.

The disc attachment 1 may be made of any suitable material of combination of materials including, but not limited to, plastic, nylon, ceramic or metal.

While the preferred embodiment of the present invention has been disclosed herein, it is understood that various modification can be made without departing from the scope of the presently claimed invention.

## Claims

1. A disc assembly (1) for use with a food processor and adapted to be mounted to a rotationally driven shaft, said assembly comprising
a central hub (2) having an opening (3) at its bottom;
an internal shaft-receiving sleeve (4) located in said central hub;
a circular disc portion (5) attached at one end of the hub (2) and having an opening therethrough corresponding to said sleeve (4); and
**characterised in that** a slanted segment (6) of said disc portion (5) being defined by a segment of said disc portion (5) that is in a plane that is not parallel to the remainder of said disc portion (5), said slanted segment extending radially from the center of said disc portion (5) to the radial edge of said disc portion (5) and forming a step so that a first adjacent portion of said disc portion (5) on one side of the slanted segment (6) is not co-planar with a second adjacent portion of said disc portion (5) on another side of the slanted segment (6).

2. A disc assembly (1) according to Claim 1, further comprising
a plurality of holes (7, 8, 9,), each hole being elongated in a generally rectangular shape with slightly curved sides and each hole being located such that each hole extends from a position in the slanted segment (6) to a position in an adjacent portion of said disc portion (5).

3. A disc assembly (1) according to Claim 2, further comprising
a first curved rib (10) extending in a vertical direction from, and located on, the bottom surface of said disc portion (5), and extending in a radial direction from the center of said disc portion (5) to the radial edge of said disc portion (5); and
a second curved rib (11) extending in a vertical direction from, and located on, the bottom surface of said disc portion (5), in a location opposite said first curved rib (10) with respect to the center of said disc portion (5), and extending in a radial direction from the center of said disc portion (5) to the radial edge of said disc portion (5).

4. A disc assembly (1) according to Claim 3, wherein
each of said first rib (10) and said second rib (11) have a generally curved shape when viewed from the bottom of said disc portion (5).

5. A disc assembly (1) according to Claim 4, wherein
a centerline (12) of said hub (2) defining a vertical axis therethrough is not perpendicular to a plane (13) defining any portion of said disc.

6. A disc assembly (1) according to Claim 5, wherein
said disc assembly is made of any one of, or combination of :plastic, nylon, ceramic or metal.

## Patentansprüche

1. Scheibenbaugruppe (1) für den Gebrauch mit einer Lebensmittelverarbeitungsmaschine und angepasst, um auf eine drehend angetriebene Welle montiert zu werden, wobei die Baugruppe aufweist:
eine zentrale Nabe (2), die eine Öffnung (3) an ihrer Unterseite hat,
eine interne, die Welle aufnehmende Hülse (4), die sich in der zentralen Nabe befindet,
einen kreisförmigen Scheibenteil (5), der an einem Ende der Nabe (2) befestigt ist und eine Öffnung dadurch hat, die der Hülse (4) entspricht, und
**dadurch gekennzeichnet, dass** ein geneigtes Segment (6) des Scheibenteils (5), das durch ein Segment des Scheibenteils (5), das sich in einer Ebene befindet, die zu dem Rest des Scheibenteils (5) nicht parallel ist, definiert ist, wobei sich das geneigte Segment radial von der Mitte des Scheibenteils (5) zu der radialen Kante des Scheibenteils (5) erstreckt und eine Stufe bildet, so dass ein erster benachbarter Teil des Scheibenteils (5) auf einer Seite des geneigten Segments (6) nicht mit einem zweiten benachbarten Teil des Scheibenteils (5) auf einer anderen Seite des geneigten Segments (6) koplanar ist.

2. Scheibenbaugruppe (1) nach Anspruch 1, ferner aufweisend
eine Vielzahl von Bohrungen (7, 8, 9), wobei jede Bohrung länglich in einer allgemein rechteckigen Form mit leicht gebogenen Seiten ist und jede Bohrung derart liegt, dass sich jede Bohrung von einer Position in dem geneigten Segment (6) zu einer Position in einem benachbarten Teil des Scheibenteils (5) erstreckt.

3. Scheibenbaugruppe (1) nach Anspruch 2, ferner aufweisend
eine erste gebogene Rippe (10), die sich in eine senkrechte Richtung von und auf der Bodenfläche des Scheibenteils (5) befindlich erstreckt und sich in eine radiale Richtung von der Mitte des Scheibenteils (5) zu der radialen Kante des Scheibenteils (5) erstreckt und
eine zweite gebogene Rippe (11), die sich in eine vertikale Richtung von der Bodenfläche des Scheibenteils (5) erstreckt und auf ihr befindlich in einer Lage ist, die der ersten gebogenen Rippe (10) in Bezug zu der Mitte des Scheibenteils (5) entgegengesetzt ist und sich in eine radiale Richtung von der Mitte des Scheibenteils (5) zu der radialen Kante des Scheibenteils (5) erstreckt.

4. Scheibenbaugruppe (1) nach Anspruch 3, wobei
sowohl die erste Rippe (10) als auch die zweite Rippe (11), wenn sie von der Unterseite des Scheibenteils (5) her betrachtet werden, eine allgemein gebogene Form haben.

5. Scheibenbaugruppe (1) nach Anspruch 4, wobei
eine Mittenlinie (12) der Nabe (2), die eine vertikale Achse dadurch definiert, zu einer Ebene (13), die einen Teil der Scheibe definiert, nicht senkrecht ist.

6. Scheibenbaugruppe (1) nach Anspruch 5, wobei
die Scheibenbaugruppe aus einem beliebigen oder einer Kombination der folgenden hergestellt ist: Plastik, Nylon, Keramik oder Metall.

## Revendications

1. Ensemble de disque (1) pour usage avec un robot de cuisine et qui est à même d'être monté sur un arbre entraîné en rotation, ledit ensemble comprenant :
un moyeu central (2) ayant une ouverture (3) dans sa partie inférieure ;
un manchon récepteur d'arbre interne (4) situé dans ledit moyeu central ;
une portion de disque circulaire (5) fixée à une extrémité du moyeu (2) et ayant une ouverture qui la traverse et qui correspond audit manchon (4) ; et
**caractérisé en ce qu'**un segment incliné (6) de ladite portion de disque (5) est défini par un segment de ladite portion de disque (5) qui est dans un plan qui n'est pas parallèle au restant de ladite portion de disque (5), ledit segment incliné s'étendant radialement du centre de ladite portion de disque (5) au bord radial de ladite portion de disque (5) et formant un gradin de sorte qu'une première portion adjacente de ladite portion de disque (5), d'un côté du segment incliné (6), ne soit pas coplanaire avec une seconde portion adjacente de ladite portion de disque (5), d'un autre côté du segment incliné (6).

2. Ensemble de disque (1) selon la revendication 1, comprenant en outré :
une pluralité de trous (7, 8, 9), chaque trou étant allongé en forme généralement rectangulaire avec des côtés légèrement incurvés et chaque trou étant situé de sorte que chaque trou s'étende d'une position dans le segment incliné (6) à une position dans une portion adjacente de ladite portion de disque (5).

3. Ensemble de disque (1) selon la revendication 2, comprenant par ailleurs :
une première nervure incurvée (10) s'étendant dans une direction verticale de la surface inférieure de ladite portion de disque (5) et située sur celle-ci, et s'étendant dans une direction radiale du centre de ladite portion de disque (5) au bord radial de ladite portion de disque (5) ; et
une seconde nervure incurvée (11) s'étendant dans une direction verticale depuis la surface inférieure de ladite portion de disque (5) et située sur celle-ci, dans un emplacement opposé à ladite première nervure incurvée (10) par rapport au centre de ladite portion de disque (5), et s'étendant dans une direction radiale du centre de ladite portion de disque (5) au bord radial de ladite portion de disque (5).

4. Ensemble de disque (1) selon la revendication 3, dans lequel :
chacune de ladite première nervure (10) et de ladite seconde nervure (11) a une forme généralement incurvée lorsqu'on l'observe depuis le fond de ladite portion de disque (5).

5. Ensemble de disque (1) selon la revendication 4, dans lequel :
une ligne centrale (12) dudit moyeu (2) définissant un axe vertical qui le traverse n'est pas perpendiculaire à un plan (13) définissant une portion quelconque dudit disque.

6. Ensemble de disque (1) selon la revendication 5, dans lequel :
ledit ensemble de disque est constitué de l'un quelconque des matériaux suivants : une matière plastique, du Nylon, une céramique ou un métal, ou d'une combinaison de ceux-ci.
